# EUROPÄISCHE PATENTANMELDUNG

(11) **EP 4 350 903 A1**
(43) Veröffentlichungstag der Anmeldung: **10.04.2024**
(21) Anmeldenummer: 22199560.8
(22) Anmeldetag: 04.10.2022
(51) Int. Cl.: H01R 43/28

(54) **MASCHINENVERBUND UND VERFAHREN ZUM ANORDNEN VON KABELN GEMÄSS EINER VORGEGEBENEN KABELSEQUENZ**

(71) Anmelder: komax Holding AG, 6036 Dierikon (CH)
(72) Erfinder: VIVIROLI, Stefan, 6048 Horw (CH)
(74) Vertreter: EGLI-EUROPEAN PATENT ATTORNEYS

(57) **Zusammenfassung**

Ein Maschinenverbund (V) zum Anordnen von Kabeln gemäss einer vorgegebenen Kabelsequenz (S1, ..., S4) weist eine erste Kabelausgabeeinrichtung (M1, M2, K1, L1, L2, E1, E2) eine zweite Kabelausgabeeinrichtung (M1, M2, K1, L1, L2, E1, E2) und eine Kabeltransporteinrichtung (K, K2) auf. Die Kabelsequenz umfasst Kabeltypen aus zumindest einer ersten Kabeltypgruppe und einer zweiten Kabeltypgruppe umfasst, wobei die erste Kabeltypgruppe von einem ersten Kabeltyp und einem zweiten Kabeltyp nur den ersten Kabeltyp umfasst und die zweite Kabeltypgruppe von dem ersten Kabeltyp und dem zweiten Kabeltyp nur den zweiten Kabeltyp umfasst. Die erste Kabelausgabeeinrichtung (M1, M2, K1, L1, L2, E1, E2) ist konfiguriert zum Ausgeben eines Kabels der ersten Kabeltypgruppe. Die zweite Kabelausgabeeinrichtung (M1, M2, K1, L1, L2, E1, E2) ist konfiguriert zum Ausgeben eines Kabels der zweiten Kabeltypgruppe. Die Kabeltransporteinrichtung (K, K2) ist konfiguriert zum selektiven Übernehmen des Kabels von der ersten Kabelausgabeeinrichtung und des Kabels von der zweiten Kabelausgabeeinrichtung und zum Transportieren der übernommenen Kabel, wobei das selektive Übernehmen zumindest teilweise gemäss der vorgegebenen Kabelsequenz (S1, ..., S4) erfolgt.

Ein Verfahren zum Anordnen von Kabeln gemäss der vorgegebenen Kabelsequenz nutzt den Maschinenverbund.

## Beschreibung

### TECHNISCHES GEBIET

Ausführungsformen der vorliegenden Offenbarung betreffen einen Maschinenverbund zum Anordnen von Kabeln gemäss einer vorgegebenen Kabelsequenz. Weitere Ausführungsformen betreffen ein Verfahren zum Anordnen von Kabeln gemäss einer vorgegebenen Kabelsequenz unter Nutzung eines Maschinenverbunds.

### HINTERGRUND

Vielfach werden zur Herstellung von elektrischen Verbindungen an einem Ort verschiedenartige Kabel verwendet. Beispielsweise ist der Ort eine Produktionsstätte für ein Produkt, an dem die verschiedenartigen Kabel verwendet werden. Ein Beispiel für ein solches Produkt ist ein Kraftfahrzeug, ein Beispiel für die Produktionsstätte ist eine Montageanlage für das Kraftfahrzeug, und beispielsweise werden die verschiedenartigen Kabel einzeln oder zu Kabelbäumen zusammengefasst an dem Kraftfahrzeug in der Montageanlage verbaut. Eine Verschiedenartigkeit ist durch einen oder mehrere veränderliche Parameter definiert, die beispielsweise die Länge, die Mantelfarbe und/oder die Kontaktbestückung der Kabel umfassen.

In jedem Exemplar des Produkts wird eine Menge von solchen verschiedenartigen Kabeln in einer bestimmten Anzahl benötigt. Eine Abfolge solcher verschiedenartiger Kabel wird als Kabelsequenz bezeichnet. Wenn z. B. verschiedenartige (unterschiedlich konfigurierte) Kabel aus einer Gruppe umfassend ein Kabel mit einer Konfiguration A (vom Typ A), eines mit einer Konfiguration B (vom Typ B), eines mit einer Konfiguration C1 (vom Typ C1), eines mit einer Konfiguration C2 (vom Typ C2) und eines mit einer Konfiguration D (vom Typ D) stammen, dann umfasst eine beispielhafte Kabelsequenz eine Abfolge A, B, C1, C2, D, und eine andere beispielhafte Kabelsequenz umfasst eine Abfolge B, B, D, B, A.

Es sind Kabelverabeitungsmaschinen zum Konfektionieren (umfassend zumindest ein Ablängen, Abisolieren und ggf. Bestücken mit einem Kontakt wie z. B. einem Crimpkontakt) von Kabeln bekannt, die mit einer Maschinenkonfiguration stets Kabel vom selben Typ erzeugen, beispielsweise nur Kabel vom Typ A. Sollen Kabel von einem anderen Typ auf derselben Kabelverarbeitungsmaschine erzeugt werden, muss diese Kabelverarbeitungsmaschine auf eine andere Maschinenkonfiguration umgerüstet werden, so dass sie anschliessend beispielsweise nur Kabel vom Typ B erzeugt. Die erzeugten bzw. produzierten Kabel werden als Lose aus der Ablagewanne entnommen und zu möglichen weiterführenden Verarbeitungsschritten (z.B. Verlegen an einem Kabelbrett) transportiert, eventuell auch mit einer Zwischenlagerung. Die weiterführenden Verarbeitungsschritte beinhalten den Vorgang, die Lose zu vereinzeln und zu Sequenzen zusammenzusetzen, beispielsweise, indem eine Person am Verlegebrett für jeden Kabelbaum die benötigten Kabel aus verschiedenen Losen entnimmt. Solche Kabelverarbeitungsmaschinen werden daher auch als Maschinen vom Losproduktionstyp bezeichnet.

Es sind ferner Kabelverarbeitungsmaschinen zum Konfektionieren (umfassend zumindest ein Ablängen, Abisolieren und ggf. Bestücken mit einem Kontakt) von Kabeln bekannt, die mit einer Maschinenkonfiguration eine oder mehrere Kabelsequenzen erzeugen können. Solche komplex aufgebauten Maschinen weisen alle für eine Kabelsequenz benötigten Verarbeitungsvorrichtungen auf. Um die Kabelsequenz herzustellen, werden alle benötigten Ausgangsmaterialien an die Maschine gebracht, die dann direkt in Sequenzen produziert, oder die Materialien sogar zu Kabelbäumen zusammensetzt.

Die Losproduktion hat gegenüber der Sequenzproduktion den Nachteil, dass sie einen nachfolgenden Prozessschritt erfordert (Vereinzelung der Leitungen und Neuordnung zu Sequenzen), was ein aufwändiger, schwer zu automatisierender Schritt ist.

Die Sequenzproduktion auf einer Kabelverarbeitungsmaschine hat gegenüber der Losproduktion den Nachteil, dass alle für die Produktion der Sequenz notwendigen Vorrichtungen auf der Maschine installiert sind, aber nur immer ein Teil davon aktiv ist. Zudem muss die Maschine technisch aufwändiger und grösser gebaut werden. Beides verschlechtert das Kosten/Nutzenverhältnis. So sind beispielsweise auf besagter Maschine für eine Sequenz mit vier verschiedenen Crimpkontakten vier Crimpmodule erforderlich, wovon aber pro Kabel nur je eines pro Kabelende aktiv ist, während bei Lose produzierenden Maschinen auf zwei Maschinen mit je zwei Crimpmodulen alle Module permanent aktiv sind.

Die Druckschrift US 10,148,055 B2 offenbart ein Kabelbaumproduktionssystem mit einer Kabelverarbeitungsmaschine vom Sequenzproduktionstyp.

Es besteht Bedarf an einer Lösung zum automatisierten Erzeugen einer Kabelsequenz, bei der das Kosten/Nutzenverhältnis verbessert ist.

### ZUSAMMENFASSUNG DER ERFINDUNG

Gemäss einem Aspekt der vorliegenden Offenbarung wird ein Maschinenverbund bereitgestellt. Der Maschinenverbund dient zum Anordnen von Kabeln gemäss einer vorgegebenen Kabelsequenz. Die Kabelsequenz umfasst Kabeltypen aus zumindest einer ersten Kabeltypgruppe und einer zweiten Kabeltypgruppe. Bei einem vorgegebenen ersten Kabeltyp und einem vorgegebenen davon verschiedenen zweiten Kabeltyp umfasst die erste Kabeltypgruppe nur den ersten Kabeltyp (aber nicht den zweiten Kabeltyp), und die zweite Kabeltypgruppe umfasst nur den zweiten Kabeltyp (aber nicht den ersten Kabeltyp).

Jegliche von erster Kabeltypgruppe und zweiter Kabeltypgruppe kann aber zusätzlich noch weitere Kabeltypen umfassen; beispielsweise kann die erste Kabeltypgruppe noch einen dritten Kabeltyp umfassen, und die zweite Kabeltypgruppe kann noch einen vierten Kabeltyp umfassen; oder zumindest eine von der ersten Kabeltypgruppe und der zweiten Kabeltypgruppe kann noch mehrere weitere Kabeltypen umfassen, die sowohl von dem ersten, als auch dem zweiten Kabeltyp verschieden sind.

Ein Kabel, wie hierin verwendet, umfasst beispielsweise eine auf bestimmte Länge zugeschnittene Einzelleitung mit oder ohne Verarbeitung und Bestückung der Enden, eine verdrillte Leitung oder ein anderes auf einer gängigen Kabelverarbeitungsmaschinen hergestelltes Produkt.

Der Maschinenverbund umfasst eine erste Kabelausgabeeinrichtung und eine zweite Kabelausgabeeinrichtung. Die erste Kabelausgabeeinrichtung ist konfiguriert zum Ausgeben eines Kabels (bzw. mehrerer Kabel) der ersten Kabeltypgruppe. Die zweite Kabelausgabeeinrichtung ist konfiguriert zum Ausgeben eines Kabels (bzw. mehrerer Kabel) der zweiten Kabeltypgruppe. Mithin ist unter den Kabeln, die die erste Kabelausgabeeinrichtung ausgibt, der zweite Kabeltyp nicht vorhanden, und unter den Kabeln, die die zweite Kabelausgabeeinrichtung ausgibt, ist der erste Kabeltyp nicht vorhanden.

Der Maschinenverbund umfasst weiter eine Kabeltransporteinrichtung. Die Kabeltransporteinrichtung ist konfiguriert zum selektiven Übernehmen des Kabels von der ersten Kabelausgabeeinrichtung und des Kabels von der zweiten Kabelausgabeeinrichtung, sowie zum Transportieren der übernommenen Kabel. Das selektive Übernehmen erfolgt zumindest teilweise gemäss der vorgegebenen Kabelsequenz.

Die Kabelsequenz ist nicht auf Kabeltypen aus der ersten und zweiten Kabeltypgruppe beschränkt. Dementsprechend ist die Konfiguration auch nicht auf genau zwei Kabelausgabeeinrichtungen beschränkt, sondern es können auch mehr als zwei Kabelausgabeeinrichtungen bereitgestellt werden.

Selektives Übernehmen zumindest teilweise gemäss der vorgegebenen Kabelsequenz, wie hierin verwendet, umfasst insbesondere ein Übernehmen der verschiedenen Kabeltypen derart, dass sich als Ergebnis des Übernehmens zumindest ein oder mehrere Abschnitte der Kabelsequenz an der Kabeltransporteinrichtung einstellen bzw. wiederfinden. Beispielsweise umfasst die Kabeltransporteinrichtung mehrere in Abfolge (z. B. der Reihe nach) angeordnete Aufnahmeeinrichtungen wie z. B. Halterungen, und an den in der Abfolge angeordneten Aufnahmeeinrichtungen finden sich infolge des selektiven Übernehmens die verschiedenartigen Kabel zumindest gemäss einem Abschnitt der vorgegebenen Kabelsequenz wieder. Ein derartiger Abschnitt umfasst beispielsweise mehr als zwei Kabel in der Abfolge gemäss der vorgegebenen Kabelsequenz.

Es ist insbesondere denkbar, dass zunächst Lücken zwischen den einzelnen Abschnitten verbleiben, so dass sich die Kabelsequenz noch nicht vollständig einstellt, und anschliessend ein nachträgliches Einreihen von weiteren Kabeln in die Lücken erfolgt, derart, dass sich die Kabelsequenz vollständig einstellt. Alternativ oder zusätzlich ist es denkbar, dass zunächst nur einzelne Abschnitte gemäss der Kabelsequenz angeordnet sind und andere Abschnitte zunächst nicht gemäss der Kabelsequenz angeordnet sind, und anschliessend ein Umsortieren der nicht kabelsequenzkonformen Abschnitte erfolgt, derart, dass sich die Kabelsequenz vollständig einstellt.

In Ausführungsformen ist die Kabeltransporteinrichtung derart konfiguriert, dass das selektive Übernehmen vollständig gemäss der vorgegebenen Kabelsequenz erfolgt. Dies schliesst ein, dass die verschiedenen Kabeltypen derart übernommen werden, dass sich als Ergebnis des Übernehmens die vollständige Kabelsequenz an der Kabeltransporteinrichtung einstellt bzw. wiederfindet.

Das selektive Übernehmen schliesst ein unmittelbares Übernehmen von der ersten und/oder zweiten Kabelausgabeeinrichtung ein. Alternativ oder zusätzlich schliesst das selektive Übernehmen ein mittelbares Übernehmen ein, d. h. es ist denkbar, dass die erste und/oder zweite Kabelausgabeeinrichtung ihre jeweiligen Kabel zunächst an eine oder mehrere Zwischenstellen übergeben und die Kabeltransporteinrichtung die jeweiligen Kabel dann selektiv von der oder den Zwischenstellen, dadurch jedoch mittelbar von der ersten und/oder zweiten Kabelausgabeeinrichtung übernimmt.

In Ausführungsformen umfasst die Kabeltransporteinrichtung eine Mehrzahl von in einer Sequenzrichtung nacheinander angeordneten (aufeinanderfolgenden) Haltern. Jeder Halter dient zum Aufnehmen zumindest eines Teils eines Kabels. Insbesondere dient jeder Halter zum Aufnehmen zumindest eines Teils eines Kabels gemäss der Kabelsequenz. Nacheinander in der Sequenzrichtung angeordnet, wie hierin verwendet, umfasst eine Anordnung der Halter zueinander in einem gleichbleibenden oder veränderlichen Intervall beispielsweise linear nebeneinander oder ringartig nebeneinander oder schlaufenartig nebeneinander. Insbesondere ist die Sequenzrichtung eine Transportrichtung der Kabeltransporteinrichtung, in der die Kabel in der durch ihre Abfolge definierten Sequenz transportiert werden.

Es ist denkbar, dass mehrere aufeinanderfolgende Halter verschiedene Teile ein- und desselben Kabels aufnehmen. Zum Beispiel kann ein- und dasselbe Kabel als Schlaufe auf die mehreren aufeinanderfolgenden Halter gelegt bzw. gehängt werden, z. B. das eine Ende des Kabels auf einen Halter und das andere Ende des Kabels auf den darauffolgenden Halter. Dies schliesst auch ein, dass verschiedene Teile ein- und desselben Kabels von aufeinanderfolgenden Haltern unter Auslassung einzelner Halter aufgenommen werden.

In Ausführungsformen umfasst der Maschinenverbund ferner eine Kabelentnahmeeinrichtung. Die Kabeltransporteinrichtung ist ferner konfiguriert zum selektiven Übergeben eines Kabels aus der Kabeltransporteinrichtung an die Kabelentnahmeeinrichtung. Das selektive Übergeben erfolgt zumindest teilweise gemäss der vorgegebenen Kabelsequenz. Dies schliesst insbesondere ein, dass beim Übernehmen des Kabels von der ersten Kabelausgabeeinrichtung und des Kabels von der zweiten Kabelausgabeeinrichtung zunächst nur ein oder mehrere Abschnitte gemäss der vorgegebenen Kabelsequenz angeordnet sind; dann kann durch gezieltes (selektives) Übergeben des passenden Kabels aus der Kabeltransporteinrichtung an die Kabelentnahmeeinrichtung bewirkt werden, dass sich die vorgegebene Kabelsequenz in mindestens einem weiteren Abschnitt einstellt. Dieses Vorgehen kann auch wiederholt werden, bis sich durch das gezielte Übergeben des passenden Kabels aus der Kabeltransporteinrichtung an die Kabelentnahmeeinrichtung die vorgegebene Kabelsequenz vollständig einstellt. Das selektive Übergeben des Kabels aus der Kabeltransporteinrichtung an die Kabelentnahmeeinrichtung kann aber auch einen Zwischenschritt darstellen, auf den ein oder mehrere weitere Vorgänge selektiven Übernehmens eines Kabels von der ersten Kabelausgabeeinrichtung und/oder eines Kabels von der zweiten Kabelausgabeeinrichtung folgt.

In Ausführungsformen umfasst der Maschinenverbund ferner eine Greifeinrichtung zum selektiven Übernehmen und/oder zum selektiven Übergeben des Kabels. Die Greifeinrichtung kann insbesondere so angeordnet sein oder an eine solche Position verbracht werden können, dass sie zum Übernehmen/Übergeben eines Kabels die Position eines Halters der Kabeltransporteinrichtung ansteuern bzw. anfahren kann und dass sie zum Übernehmen/Übergeben die Position zumindest einer von der ersten Kabelausgabeeinrichtung, der zweiten Kabelausgabeeinrichtung und der Kabelentnahmeeinrichtung ansteuern bzw. anfahren kann. Ein Verbringen an die Position kann dabei ein Bewegen der Greifeinrichtung an die Position umfassen und/oder ein Bewegen zumindest einer von der Kabeltransporteinrichtung, der ersten Kabelausgabeeinrichtung, der zweiten Kabelausgabeeinrichtung und der Kabelentnahmeeinrichtung relativ zu einer feststehenden Position der Greifeinrichtung umfassen. In Ausführungsbeispielen umfasst die Greifeinrichtung einen Roboterarm und einen Greifer.

In Ausführungsformen ist die Kabeltransporteinrichtung zu zumindest einer von der ersten Kabelausgabeeinrichtung, der zweiten Kabelausgabeeinrichtung und der Kabelentnahmeeinrichtung bewegbar, insbesondere automatisch bewegbar. Beispielsweise ist die Kabeltransporteinrichtung auf motorisch ansteuerbaren Rollen angeordnet und kann durch entsprechende Ansteuerung der Rollen selektiv und automatisch so bewegt werden, dass sie je nach momentaner Notwendigkeit zum Erhalten der vorgegeben Kabelsequenz die erste Kabelausgabeeinrichtung, die zweite Kabelausgabeeinrichtung und die Kabelentnahmeeinrichtung anfährt.

In Ausführungsformen umfasst zumindest eine von der ersten Kabelausgabeeinrichtung und der zweiten Kabelausgabeeinrichtung eine Kabelverarbeitungsmaschine.

In Ausführungsformen umfasst zumindest eine von der ersten Kabelausgabeeinrichtung, der zweiten Kabelausgabeeinrichtung und der Kabelentnahmeeinrichtung eine Kabeleinspeisevorrichtung.

In Ausführungsformen ist die Kabeleinspeisevorrichtung zum Übernehmen eines durch eine Bedienperson manuell zugeführten Kabels konfiguriert. Alternativ oder zusätzlich ist die Kabeleinspeisevorrichtung zum Übergeben eines Kabels an eine Bedienperson konfiguriert. Mittels der Kabeleinspeisevorrichtung können demnach manuell Kabel, die in der ersten Kabeltypgruppe und/oder der zweiten Kabeltypgruppe enthalten sind, in den Maschinenverbund und dessen automatischen Ablauf eingespeist werden oder daraus entnommen werden.

In Ausführungsformen umfasst zumindest eine von der ersten Kabelausgabeeinrichtung, der zweiten Kabelausgabeeinrichtung und der Kabelentnahmeeinrichtung einen Kabelspeicher. Ein Kabelspeicher ist beispielsweise so konfiguriert, dass er ein oder mehrere Kabel aus der Kabeltransporteinrichtung aufnimmt und zu einem späteren Zeitpunkt wieder an die Kabeltransporteinrichtung abgibt, z. B. zum Umsortieren der Kabel, oder zum Zwischenlagern von vorproduzierten Kabeln.

Es ist ebenfalls denkbar, dass zusätzlich zu der (primären) Kabeltransporteinrichtung eine oder mehrere weitere (sekundäre) Kabeltransporteinrichtungen vorhanden ist/sind. Solche weiteren Kabeltransporteinrichtungen können beispielsweise selbst als Kabelspeicher dienen oder als solche aufgefasst werden.

In Ausführungsformen umfasst der Maschinenverbund ferner eine Steuerung, die zum Steuern zumindest eines von dem selektiven Übernehmen und dem selektiven Übergeben konfiguriert ist. In Ausführungsformen ist die Steuerung ferner so konfiguriert, dass sie eine gewünschte Kabelsequenz (z. B. über eine Eingabeeinheit) entgegennimmt, eine Zusammenstellung aus zumindest der ersten Kabeltypgruppe und der zweiten Kabeltypgruppe ermittelt, und zwar gemäss der gewünschten Kabelsequenz, und so die vorgegebene Kabelsequenz ermittelt, und eine tatsächliche Abfolge von Kabeln gemäss der vorgegebenen Kabelsequenz durch Ansteuern zumindest der ersten Kabelausgabeeinrichtung und der zweiten Kabelausgabeeinrichtung und optional der Kabelentnahmeeinrichtung erzeugt.

In Ausführungsformen umfasst ist die Steuerung weiter konfiguriert zum Speichern von Daten, die zumindest eines aus der folgenden Gruppe enthalten: gegenwärtige Position eines Kabels in der Kabeltransporteinrichtung, Quelle eines Kabels in der Kabeltransporteinrichtung, Konfiguration des Maschinenverbundes, Messdaten eines Kabels in der Kabeltransporteinrichtung, Produktionsdaten eines Kabels in der Kabeltransporteinrichtung.

Gemäss einem weiteren Aspekt der vorliegenden Offenbarung wird ein Verfahren zum Anordnen von Kabeln gemäss einer vorgegebenen Kabelsequenz bereitgestellt. Die Kabelsequenz umfasst Kabeltypen aus zumindest einer ersten Kabeltypgruppe und einer zweiten Kabeltypgruppe. Die erste Kabeltypgruppe umfasst von einem ersten Kabeltyp und einem zweiten Kabeltyp nur den ersten Kabeltyp, und die zweite Kabeltypgruppe umfasst von dem ersten Kabeltyp und dem zweiten Kabeltyp nur den zweiten Kabeltyp. Das Verfahren umfasst ein Ausbilden eines Maschinenverbundes; und ein automatisches Ansteuern des Maschinenverbundes. Der Maschinenverbund umfasst eine erste Kabelausgabeeinrichtung, konfiguriert zum Ausgeben eines Kabels der ersten Kabeltypgruppe; eine zweite Kabelausgabeeinrichtung, konfiguriert zum Ausgeben eines Kabels der zweiten Kabeltypgruppe; und eine Kabeltransporteinrichtung, konfiguriert zum selektiven Übernehmen des Kabels von der ersten Kabelausgabeeinrichtung und des Kabels von der zweiten Kabelausgabeeinrichtung und zum Transportieren der übernommenen Kabel. Das Ansteuern des Maschinenverbundes umfasst ein derartiges Ansteuern, dass das selektive Übernehmen zumindest teilweise gemäss der vorgegebenen Kabelsequenz erfolgt.

In Ausführungsformen des Verfahrens umfasst der Maschinenverbund ferner eine Kabelentnahmeeinrichtung, wobei die Kabeltransporteinrichtung weiter konfiguriert ist zum selektiven Übergeben eines Kabels aus der Kabeltransporteinrichtung an die Kabelentnahmeeinrichtung, und wobei das Verfahren weiter ein automatisches Ansteuern des Maschinenverbundes umfasst, derart, dass das selektive Übergeben zumindest teilweise gemäss der vorgegebenen Kabelsequenz erfolgt.

In Ausführungsformen des Verfahrens umfasst dieses ferner ein Entgegennehmen einer gewünschten Kabelsequenz; ein Ermitteln einer Zusammenstellung aus zumindest der ersten Kabeltypgruppe von der ersten Kabelausgabeeinrichtung und der zweiten Kabeltypgruppe von der zweiten Kabelausgabeeinrichtung gemäss der gewünschten Kabelsequenz als die vorgegebene Kabelsequenz; und ein Erzeugen einer tatsächlichen Abfolge von Kabeln gemäss der vorgegebenen Kabelsequenz durch Ansteuern zumindest der ersten Kabelausgabeeinrichtung und der zweiten Kabelausgabeeinrichtung.

### KURZE BESCHREIBUNG DER ZEICHNUNGEN

Nachfolgend erfolgt die detaillierte Beschreibung anhand der beigefügten Zeichnungen.
Fig. 1 zeigt eine schematische Ansicht von Kabelsequenzen.
Fig. 2 zeigt schematisch eine lineare Kabeltransporteinrichtung mit Kabeln von mehreren unterschiedlichen Kabeltypen.
Fig. 3 zeigt schematisch eine umlaufende Kabeltransporteinrichtung mit Haltern, sowie Greifer zum Bestücken der Halter.
Fig. 4 zeigt schematisch die umlaufende Kabeltransporteinrichtung mit teilweise bestückten Haltern.
Fig. 5 zeigt schematisch einen Abschnitt einer Kabeltransporteinrichtung mit teilweise bestückten Haltern.
Fig. 6 zeigt schematisch einen Abschnitt einer Kabeltransporteinrichtung mit teilweise bestückten Haltern.
Fig. 7 zeigt schematisch einen Abschnitt einer Kabeltransporteinrichtung mit teilweise bestückten Haltern.
Fig. 8 zeigt schematisch einen Abschnitt einer Kabeltransporteinrichtung mit teilweise bestückten Haltern.
Fig. 9 zeigt die umlaufende Kabeltransporteinrichtung mit Haltern aus Fig. 3 und eine weitere umlaufende Kabeltransporteinrichtung, sowie Greifer zum Bestücken der Halter.
Fig. 10 zeigt die umlaufende Kabeltransporteinrichtung mit Haltern aus Fig. 3 und eine weitere umlaufende Kabeltransporteinrichtung, sowie Greifer zum Bestücken der Halter.
Fig. 11 zeigt ein schematisches Blockdiagramm eines Maschinenverbunds gemäss einem Ausführungsbeispiel, unter anderem mit einer beweglichen Kabeltransporteinrichtung.
Fig. 12 zeigt ein schematisches Blockdiagramm eines Maschinenverbunds gemäss einem Ausführungsbeispiel, unter anderem mit einem Kabelspeicher.
Fig. 13 zeigt ein schematisches Blockdiagramm eines Maschinenverbunds gemäss einem Ausführungsbeispiel, unter anderem mit einer Kabelentnahmeeinrichtung.
Fig. 14 zeigt schematisch Teile eines Maschinenverbunds zur Darstellung einer Verteiloperation der Kabel.
Fig. 15 zeigt schematisch Teile eines Maschinenverbunds zur Darstellung einer Kombinationsoperation der Kabel.
Fig. 16 zeigt ein schematisches Blockdiagramm eines Maschinenverbunds gemäss einem Ausführungsbeispiel, unter anderem mit einer Steuerung.

### DETAILLIERTE BESCHREIBUNG

Im Folgenden werden beispielhafte Ausführungsformen beschrieben, die miteinander passend kombiniert werden können bzw. aus denen einzelne Merkmale und/oder Elemente weggelassen werden können, wenn angemessen.

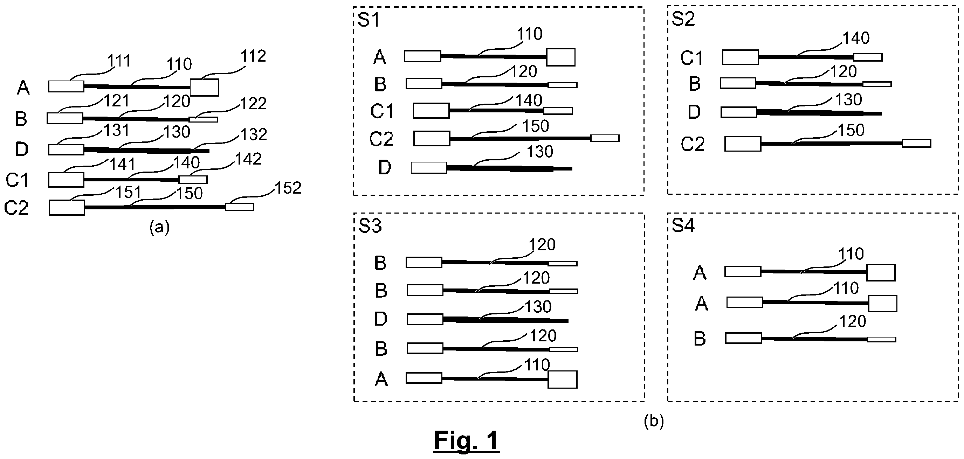

Fig. 1 zeigt eine schematische Ansicht von Kabelsequenzen S1, S2, S3, S4.

In Fig. 1 (a) ist Folgendes dargestellt: Ein Kabel 110 von einem ersten Kabeltyp weist eine erste Anschlussendkonfiguration 111 und eine zweite Anschlussendkonfiguration 112 auf, was im Folgenden als Kabeltyp A bezeichnet wird; ein Kabel 120 von einem zweiten Kabeltyp weist eine erste Anschlussendkonfiguration 121 und eine zweite Anschlussendkonfiguration 122 auf, was im Folgenden als Kabeltyp B bezeichnet wird; ein Kabel 130 von einem dritten Kabeltyp weist eine erste Anschlussendkonfiguration 131 und eine zweite Anschlussendkonfiguration 132 auf, was im Folgenden als Kabeltyp D bezeichnet wird; ein Kabel 140 von einem vierten Kabeltyp weist eine erste Anschlussendkonfiguration 141 und eine zweite Anschlussendkonfiguration 142 auf, was im Folgenden als Kabeltyp C1 bezeichnet wird; und ein Kabel 150 von einem ersten Kabeltyp weist eine erste Anschlussendkonfiguration 151 und eine zweite Anschlussendkonfiguration 152 auf, was im Folgenden als Kabeltyp C2 bezeichnet wird. Die Kabeltypen A, B, D, C1, C2 unterscheiden sich jeweils in zumindest einem von Beschaffenheit des Kabels selbst (z. B. Kabellänge, Leiterkonfiguration, Leiterquerschnitt, Leitermaterial, Isoliermaterial, Farbe der Isolierung usw.) und der ersten und/oder zweiten Anschlussendkonfiguration (Vorhandensein oder Nichtvorhandensein eines Kontakts, Kontakttyp usw.).

In einem zu montierenden Produkt, beispielsweise einem Kraftfahrzeug, wird eine Menge der verschiedenartigen Kabeltypen A, B, D, C1, C2 benötigt; diese Menge wird als Kabelsequenz (des Produktionsauftrags) bezeichnet.

In Fig. 1 (b) ist Folgendes dargestellt: Eine Kabelsequenz S1 umfasst, in dieser Reihenfolge, Kabel der Kabeltypen A, B, C1, C2, D. Eine Kabelsequenz S2 umfasst, in dieser Reihenfolge, Kabel der Kabeltypen C1, B, D, C2. Eine Kabelsequenz S3 umfasst, in dieser Reihenfolge, Kabel der Kabeltypen B, B, D, B, A. Eine Kabelsequenz S4 umfasst, in dieser Reihenfolge, Kabel der Kabeltypen A, A, B.

Allgemein liegen folgende Überlegungen zu Grunde: Die Kabelsequenz des Produktionsauftrags, insbesondere die gesamte Kabelsequenz des Produktionsauftrags, wird in Teilmengen aufgeteilt, die sich effizient produzieren lassen. Eine effiziente Produktion jeweils eines oder mehrerer Kabeltypen wird beispielsweise durch eine spezialisierte bzw. speziell konfigurierte Kabelverarbeitungsmaschine erreicht, so dass eine Teilmenge z. B. durch die Menge aller Kabel aus demselben Kabelmaterial mit gleichen Kontakten, aber verschiedener Kabellänge gebildet wird. Mehrere Kabelverarbeitungsmaschinen und weitere Einrichtungen werden zu einem Maschinenverbund zum gemeinsamen Erzeugen der Kabelsequenz S1, S2, S3, S4 zusammengefasst. Die Teilmengen werden so gebildet und als Produktionsaufträge an die Teile des Maschinenverbundes verteilt und koordiniert, dass jeder Teil (z. B. jede Kabelverarbeitungsmaschine) möglichst effizient, insbesondere ohne oder nur mit wenigen unbenutzten Prozessmodulen, nur mit wenigen Umrüstvorgängen und dergleichen, auf den jeweiligen Produktionsauftrag abgestimmt ist.

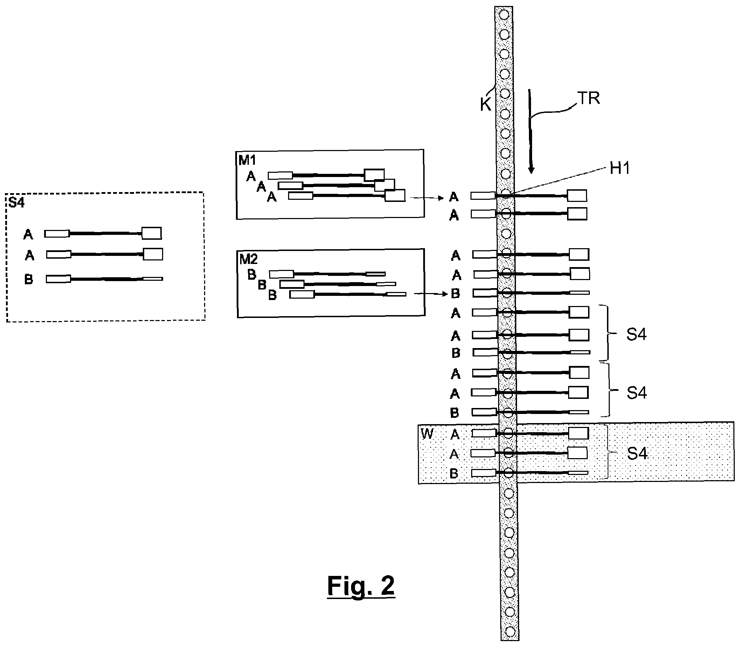

Beispielhaft zeigt Fig. 2 schematisch eine Kabeltransporteinrichtung K mit linear aufeinanderfolgend angeordneten Haltern für Kabel, wobei hier nur ein Halter H1 bezeichnet ist. Zu Erläuterungszwecken wird in Fig. 2 angenommen, dass eine erste Kabeltypgruppe genau den Kabeltyp A umfasst und eine zweite Kabeltypgruppe genau den Kabeltyp B umfasst. Es ist auch denkbar, dass die erste und/oder die zweite Kabeltypgruppe zusätzlich andere Kabeltypen umfassen, jedoch dass sich die erste Kabeltypgruppe und die zweite Kabeltypgruppe in zumindest einem Kabeltyp unterscheiden.

Die in Fig. 2 gezeigte Kabeltransporteinrichtung K transportiert die gehaltenen Kabel in einer Transportrichtung TR. In dem Beispiel in Fig. 2 sollen die Halter gemäss der Abfolge ihrer Anordnung die Kabel gemäss der Kabelsequenz S4 halten. Dazu gibt eine erste Kabelausgabeeinrichtung, in Fig. 2 in Form von einer ersten Kabelverarbeitungsmaschine M1, Kabel der ersten Kabeltypgruppe (hier: nur Kabel vom Kabeltyp A) aus, und eine zweite Kabelausgabeeinrichtung, in Fig. 2 wiederum in Form von einer zweiten Kabelverarbeitungsmaschine M2, gibt Kabel der zweiten Kabeltypgruppe (hier: nur Kabel vom Kabeltyp B) aus. Die Kabeltransporteinrichtung K übernimmt die Kabel vom Kabeltyp A und die Kabel vom Kabeltyp B von der jeweiligen Maschine M1, M2 derart, dass sich die Kabelsequenz S4 (also A, A, B) in der Abfolge an der Kabeltransporteinrichtung K ergibt. Die Sequenz A, A, B (Sequenz S4) wird gemäss dem Beispiel aus Fig. 2 also auf die zwei Kabelverarbeitungsmaschinen M1, M2 so verteilt, dass die Maschine M1 alle Kabel vom Kabeltyp A und die Maschine M2 alle Kabel vom Kabeltyp B produziert.

Jede Kabelausgabeeinrichtung wie z. B. die Kabelverarbeitungsmaschine M1, M2 ist vorteilhaft so konstruiert, dass sie ein Kabel bereitstellt (beispielsweise produziert oder aus einem Kabelspeicher entnimmt) und anschliessend an mindestens einem Punkt hält, so dass es die Kabeltransporteinrichtung K an diesem Punkt effizient übernehmen kann. Zum Übernehmen kann beispielsweise ein Schwenkarm einer Schwenkmaschine (nicht dargestellt), der das nacheilende Kabelende des produzierten Kabels hält, das Kabel an eine definierte Stelle bewegen, wo es von der Kabeltransporteinrichtung K, beispielsweise einem Halter der Kabeltransporteinrichtung K, der sich zu diesem Zeitpunkt an der definierten Stelle befindet, übernommen wird.

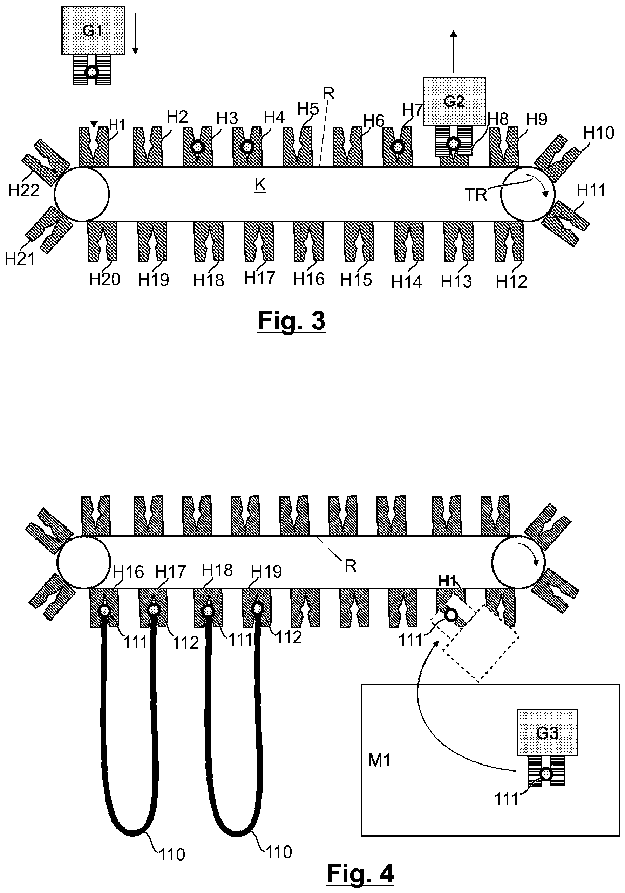

Fig. 3 zeigt schematisch eine Draufsicht auf eine umlaufende Kabeltransporteinrichtung K mit Haltern H1 bis H22, sowie Greifer (Kabelgreifer) G1, G2 zum Bestücken der Halter. Die umlaufende Kabeltransporteinrichtung bewegt die Halter Hl...H22 in einer Transportrichtung TR. Die Transportrichtung TR ist in Fig. 3 beispielhaft im Uhrzeigersinn dargestellt. Es ist jedoch auch möglich, dass die Transportrichtung gegen den Uhrzeigersinn verläuft oder dass die Transportrichtung wechselt. Die Anzahl von Haltern ist in Fig. 3 beispielhaft mit 22 dargestellt; es ist jedoch eine beliebige Anzahl von Haltern möglich, solange die längste gewünschte Kabelsequenz von den Haltern aufgenommen werden kann, also auch weniger oder mehr als 22 Halter.

Die Kabeltransporteinrichtung K ist zum Aufnehmen der Kabel in den Haltern H1...H22 konstruiert. Beispielsweise ist eine Rollenkette oder ein umlaufender Riemen R mit den Haltern H1...H22 (Kabelhaltern) bestückt. In jeden Halter H1...H22 kann zumindest ein Teil eines Kabels so eingeführt werden, dass der jeweilige Halter eingeführte Teil des Kabels hält, beispielsweise klemmt. Die Halter H1...H22 sind vorzugsweise in einem gleichmässigen Intervall (in einem gleichbleibenden Abstand zueinander) angeordnet; es ist jedoch auch denkbar, dass die Halter H1...H22 unterschiedliche Abstände zueinander aufweisen. Die Halter H1...H22 sind vorzugsweise gleich oder gleichartig ausgebildet; es ist jedoch auch denkbar, verschiedene Arten von Haltern H1...H22 vorzusehen. Beispielsweise können verschiedene Arten von Haltern H1...H22 zum Halten von unterschiedlichen Kabeltypen optimiert sein.

Die Kabeltransporteinrichtung K wird so an der Kabelausgabeeinrichtung (beispielsweise der Kabelverarbeitungsmaschine M1, M2) platziert, dass das Kabel mit einer geeigneten Übernahmeeinrichtung oder mittels einer Relativbewegung von der Kabelausgabeeinrichtung in die Kabeltransporteinrichtung übernommen werden kann.

Wenn sich beispielsweise der Halter (Kabelhalter) H1, in den zu einem Übernahmezeitpunkt ein Kabel übernommen werden soll, an der definierten Stelle (einer Übergabestelle) befindet, wird das Kabel von der Kabelausgabeeinrichtung (z. B. der Kabelverarbeitungsmaschine M1) in den Kabelgreifer G1 übernommen, und anschliessend wird das Kabel vom Kabelgreifer G1 in den Halter H1 übernommen. Die übrigen Halter H2...H22 sind zum Übernahmezeitpunkt beispielsweise leer oder mit anderen Kabeln bestückt. Der weitere Kabelgreifer G2 dient beispielsweise dazu, ein Kabel aus der Kabeltransporteinrichtung K zu übernehmen und an einen anderen Ort zu verbringen.

Fig. 4 zeigt schematisch die umlaufende Kabeltransporteinrichtung K aus Fig. 3 mit teilweise bestückten Haltern. In Fig. 4 ist gezeigt, dass die Halter H1...H22 der Kabeltransporteinrichtung K oberhalb der Kabelebene angeordnet sind, die durch die Kabelausgabeeinrichtung (hier: Kabelverarbeitungsmaschine M1) vorgegeben wird. Die Übernahmeeinrichtung (hier: ein Greifer G3) übernimmt ein Kabel aus der Kabelausgabeeinrichtung M1, befördert es zur Kabeltransporteinrichtung K und klemmt es in den passenden Halter (hier: Halter H1) der Kabeltransporteinrichtung K. Wie in Fig. 4 gezeigt, sind die Halter H16, H17 und die Halter H18, H19 jeweils mit entgegengesetzten Enden 111, 112 desselben Kabels 110 bestückt; die beiden dargestellten Kabel werden mithin am Schlaufenbogen hängend festgehalten. Dies dient jedoch nur der beispielhaften Darstellung einer Möglichkeit zum Halten der Kabel.

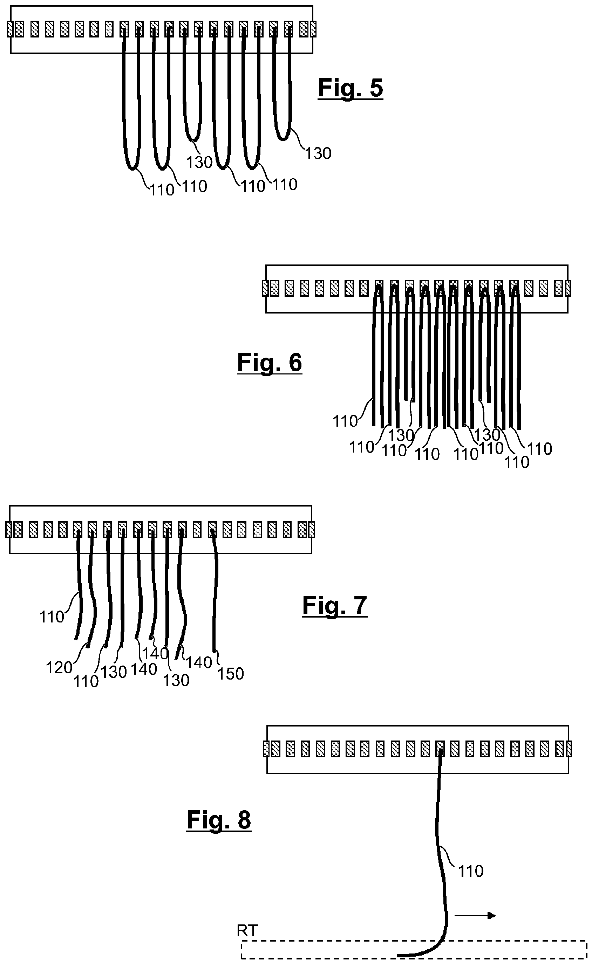

Es sind weitere Arten zum Halten der Kabel möglich, wie sie beispielsweise, aber nicht abschliessend, in den Fig. 5 bis 8 dargestellt sind. Fig. 5 zeigt eine Aufhängung am Schlaufenbogen; Fig. 6 zeigt eine Aufhängung an Punkten entfernt vom Kabelende, beispielsweise etwa in der Kabelmitte; die Fig. 7 und 8 zeigen jeweils eine Aufhängung an jeweils einem Ende des Kabels, wobei in Fig. 8 dargestellt ist, dass ab einer gewissen Kabellänge zum Vermeiden, dass das Kabel den Boden berührt, eine Rinne RI (beispielsweise aus Edelstahl) unterhalb der Kabeltransporteinrichtung K montiert wird, beispielsweise in Bodennähe oder am Boden, so dass das herabhängende Kabel vor Beschädigung und Verschmutzung geschützt ist.

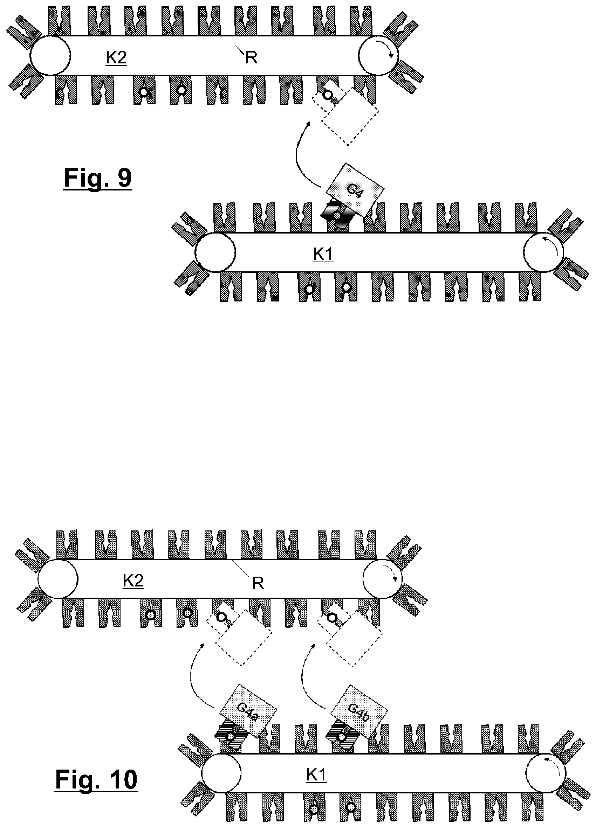

Fig. 9 zeigt die umlaufende Kabeltransporteinrichtung K1 mit Haltern aus Fig. 3 und eine weitere umlaufende Kabeltransporteinrichtung K2, sowie einen Greifer G4 zum Bestücken der Halter. Fig. 10 zeigt eine Variante der Kabeltransporteinrichtungen K1 und K2 aus Fig. 9 mit einer Mehrzahl von Greifern G4a, G4b. Der Greifer G4 bzw. die Greifer G4a, G4b können so konfiguriert sein, dass sie mittels einer Schwenkbewegung ein Kabel aus der Kabeltransporteinrichtung K1 in die Kabeltransporteinrichtung K2 überträgt oder umgekehrt. Die jeweiligen Riemen R der Kabeltransporteinrichtungen K1, K2 werden zur Übernahme so bewegt, dass sich die gewünschten Halter bei der Übergabeeinrichtung (Greifer G4, G4a, G4b) befinden. Die Variante aus Fig. 10 kann durch die mehreren Greifer G4a, G4b, die parallel arbeiten können, den Durchsatz erhöhen.

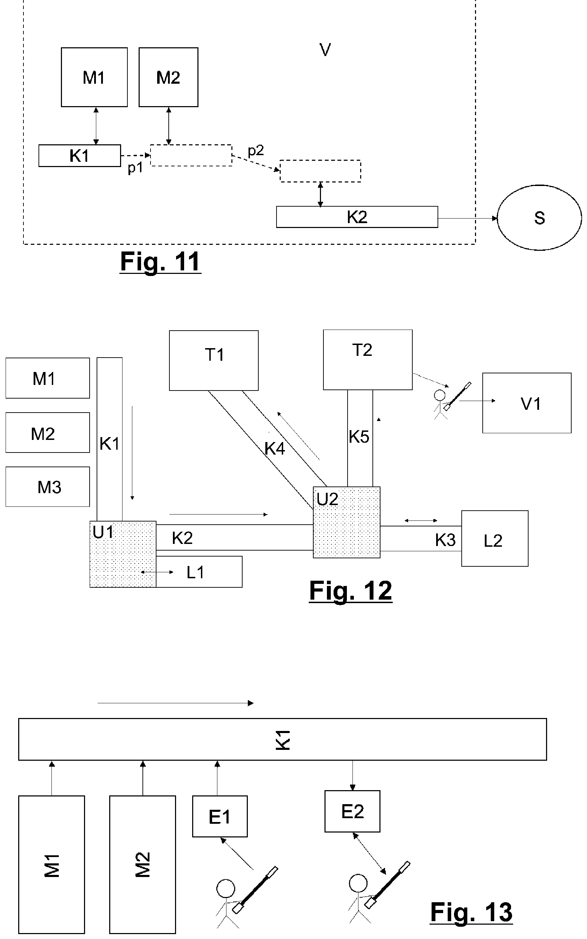

Fig. 11 zeigt ein schematisches Blockdiagramm eines Maschinenverbunds V gemäss einem Ausführungsbeispiel. Im Maschinenverbund V sind in dem Beispiel aus Fig. 11 eine erste Kabelverarbeitungsmaschine M1 als erste Kabelausgabeeinrichtung, eine zweite Kabelverarbeitungsmaschine M2 als zweite Kabelausgabeeinrichtung, eine erste Kabeltransporteinrichtung K1 und eine zweite Kabeltransporteinrichtung K2 enthalten. Die erste Kabeltransporteinrichtung K1 nimmt beispielsweise ein oder mehrere Kabel vom ersten Kabeltyp bei der ersten Kabelverarbeitungsmaschine K1 auf. Die erste Kabeltransporteinrichtung K1 bewegt sich auf einem Pfad p1 zur zweiten Kabelverarbeitungsmaschine M2. Die erste Kabeltransporteinrichtung K1 nimmt ein oder mehrere Kabel vom zweiten Kabeltyp bei der zweiten Kabelverarbeitungsmaschine M2 auf. Die erste Kabeltransporteinrichtung K1 bewegt sich auf einem Pfad p2 zur zweiten Kabeltransporteinrichtung K2. Die zweite Kabeltransporteinrichtung K2 übernimmt die Kabel von der ersten Kabeltransporteinrichtung K1 selektiv derart, dass anschliessend die vorgegebene Kabelsequenz (hier nur mit "S" bezeichnet) an der zweiten Kabeltransporteinrichtung K2 vorliegt. Mithin dient in diesem Beispiel in Fig. 11 die erste Kabeltransporteinrichtung K1 als eine Zwischenstelle, von der die zweite Kabeltransporteinrichtung K2 die Kabel mittelbar von der ersten und zweiten Kabelausgabeeinrichtung M1, M2 übernimmt.

Fig. 12 zeigt ein schematisches Blockdiagramm eines Maschinenverbunds V gemäss einem Ausführungsbeispiel. Im Maschinenverbund V sind in dem Beispiel aus Fig. 12 eine erste Kabelverarbeitungsmaschine M1 als erste Kabelausgabeeinrichtung, eine zweite Kabelverarbeitungsmaschine M2 als zweite Kabelausgabeeinrichtung, eine dritte Kabelverarbeitungsmaschine M3 als dritte Kabelausgabeeinrichtung, ein erster Kabelspeicher L1, ein zweiter Kabelspeicher L2, eine erste Übergabeeinrichtung U1, eine zweite Übergabeeinrichtung U2, eine erste Kabeltransporteinrichtung K1, eine zweite Kabeltransporteinrichtung K2, eine dritte Kabeltransporteinrichtung K3, eine vierte Kabeltransporteinrichtung K4, eine fünfte Kabeltransporteinrichtung K5, ein Bestückungsautomat T1, eine Präsentierstelle T2 und ein Verlegebrett V1 enthalten.

Der erste Kabelspeicher L1 ist so konfiguriert, dass er mittels der ersten Übernahmeeinrichtung U1 ein Kabel von der ersten Kabeltransporteinrichtung K1 übernimmt und zu einem späteren Zeitpunkt an eine bestimmte Position wieder an die erste Kabeltransporteinrichtung K1 oder an die zweite Kabeltransporteinrichtung K2 abgibt. Dadurch können die Kabel in der Kabeltransporteinrichtung umsortiert werden oder es können Kabel, für die zur gegebenen Zeit keine Kabelverarbeitungsmaschine zur Verfügung steht, vorproduziert, zwischengelagert und zur passenden Zeit wieder in ein Kabeltransportsystem eingespeist werden. Als erster Kabelspeicher L1 kann beispielsweise eine weitere Kabeltransporteinrichtung dienen oder eine anders gestaltete Vorrichtung. Eine Ausgestaltung als weitere Kabeltransporteinrichtung ist dahingehend vorteilhaft, dass die Kabel in beliebiger Reihenfolge aufgenommen und abgegeben werden können, indem der umlaufende Riemen jeweils in die richtige Stellung zum jeweiligen Greifer gebracht wird.

Fig. 13 zeigt ein schematisches Blockdiagramm eines Maschinenverbunds gemäss einem Ausführungsbeispiel. Im Maschinenverbund sind in dem Beispiel aus Fig. 13 eine erste Kabelverarbeitungsmaschine M1 als erste Kabelausgabeeinrichtung, eine zweite Kabelverarbeitungsmaschine M2 als zweite Kabelausgabeeinrichtung, eine erste Kabelentnahmeeinrichtung E1, eine zweite Kabelentnahmeeinrichtung E2 und eine Kabeltransporteinrichtung K1 enthalten. Zumindest eine von der ersten Kabelentnahmeeinrichtung E1 und der zweiten Kabelentnahmeeinrichtung E2 kann selektiv ein Kabel von der Kabeltransporteinrichtung K1 übergeben bekommen, und zwar gemäss der vorgegebenen Kabelsequenz S1...S4. Wenn sich die Richtung auf diese beschränkt, wie in Fig. 13 mit dem Pfeil bei der Kabelentnahmeeinrichtung E1 gezeigt, wird diese als unidirektional konfiguriert bezeichnet. Alternativ oder zusätzlich kann die Kabelentnahmeeinrichtung (siehe den Doppelpfeil in Fig. 13 bei E2) aber auch so konfiguriert sein, dass sie ein jeweiliges Kabel an die Kabeltransporteinrichtung K1 ausgeben kann, mithin also als Kabelausgabeeinrichtung fungiert. Wenn beide Richtungen möglich sind, wird eine derartige Kabelentnahmeeinrichtung E2 als bidirektional konfiguriert bezeichnet.

Die Kabelentnahmeeinrichtung E1, E2 dient beispielsweise zum Einspeisen von Kabeln aus Quellen ausserhalb des Maschinenverbundes V, beispielsweise Kabel, die manuell gefertigt und/oder an einem anderen Standort gefertigt wurden und/ oder auf einer spezialisierten, nicht in den Maschinenverbund integrierten Kabelverarbeitungsmaschine hergestellt wurden. Die Kabelentnahmeeinrichtungen E1, E2 sind so konfiguriert, dass in diese die Kabel beispielsweise manuell übergeben werden die diese Kabel dann innerhalb des Maschinenverbundes weitergeleitet werden. Ausserdem ist die Kabelentnahmeeinrichtung E2 so konfiguriert, dass Kabel aus dem Kabeltransportsystem oder Kabelspeicher entnommen werden können, beispielsweise zwecks Zwischenlagerung oder Qualitätsprüfung einer Stichprobe.

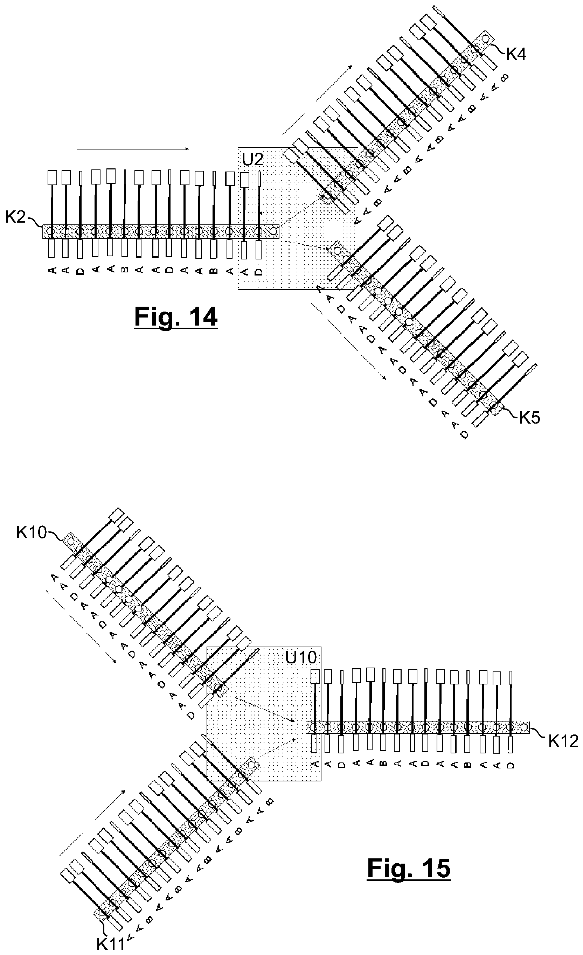

Fig. 14 zeigt schematisch Teile eines Maschinenverbunds V zur Darstellung einer Verteiloperation U2 der Kabel. Beispielsweise ist für die Vorgänge, die in Fig. 14 dargestellt sind, aus mehreren Maschinen (M1...M3), Kabeltransportsystemen (K1...K5) und Kabelspeichern (L1, L2) ein Maschinenverbund gebildet, innerhalb dessen die Kabel mittels der Verteiloperation U2 verteilt werden. Fig. 15 zeigt schematisch Teile eines Maschinenverbunds V zur Darstellung einer Umsortierungsoperation U10 der Kabel. Beispielsweise ist für die Vorgänge, die in Fig. 15 dargestellt sind, aus mehreren Maschinen (M1...M3), Kabeltransportsystemen (K1...K5) und Kabelspeichern (L1, L2) ein Maschinenverbund gebildet, innerhalb dessen die Kabel mittels der Kombinationsoperation U10 kombiniert werden. Weitere mögliche Vorgänge im Maschinenverbund sind unter anderem ein Austauschen und ein Umsortieren. Am Ende eines oder mehrerer dieser Vorgänge soll die vorgegebene Kabelsequenz S1...S4 vorliegen.

Die so in der vorgegebenen Kabelsequenz S1...S4 vorliegenden Kabel werden von der Kabeltransporteinrichtung K beispielsweise an weitere verarbeitende Maschinen übergeben, z. B. an Bestückungsautomaten T1 (siehe Fig. 12), oder sie werden einer Bedienperson präsentiert (siehe Fig. 12: Präsentierstelle T2), die die Kabel in der Reihenfolge der Sequenz S1...S4 entnimmt, um sie an einem Verlegebrett V1 (siehe Fig. 12) zu verlegen.

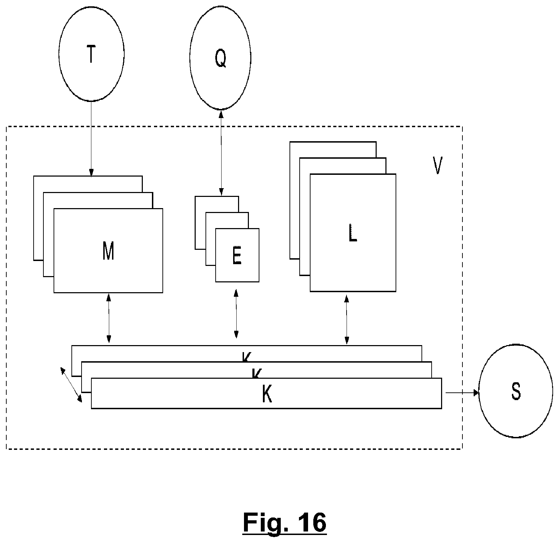

Fig. 16 zeigt ein schematisches Blockdiagramm eines Maschinenverbunds V gemäss einem Ausführungsbeispiel. Der Maschinenverbund V umfasst eine Menge von Kabelausgabeeinrichtungen M (beispielsweise Kabelverarbeitungsmaschinen), eine Menge von Kabelentnahmeeinrichtungen E, eine Menge von Kabelspeichern L, eine Menge von Kabeltransporteinrichungen K, sowie eine Steuerung 100. Den Kabelverarbeitungsmaschinen M werden Teile T von aussen zugeführt. Die Kabelentnahmeeinrichtungen E können mit Quellen nach aussen kommunizieren, d. h. aus den Quellen Q verarbeitete Kabel entgegennehmen und/oder verarbeitete Kabel in die Quellen Q ausgeben. Aus einer der Kabeltransporteinrichtungen K werden die Kabel gemäss der vorgegebenen Kabelsequenz S ausgegeben.

Die Steuerung 100 ist beispielsweise dem Maschinenverbund V übergeordnet. Die Steuerung 100 nimmt Produktionsaufträge für mindestens eine Sequenz verschiedenartiger Kabel (verschiedenes Kabelmaterial, verschiedene Endbestückungen, verschiedene Verarbeitungsschritte) entgegen. Die Steuerung ermittelt oder errechnet eine vorteilhafte Aufteilung der Produktionsaufträge in Teilaufträge und leitet diese Produktionsaufträge als Daten an die betreffenden Kabelausgabeeinrichtungen (beispielsweise Kabelverarbeitungsmaschinen M) des Verbundes V weiter oder steuert die Kabelausgabeeinrichtungen (die Kabelverarbeitungsmaschinen M) selbst.

Die Steuerung 100 verwaltet die von den einzelnen Kabelausgabeeinrichtungen ausgegebenen Kabel und koordiniert deren Transport, Zwischenlagerung und deren Übergabe an die Kabeltransporteinrichtung(en) K in einer Art und Weise, dass als Resultat die im Produktionsauftrag angeforderte Kabelsequenz (die vorgegebene Kabelsequenz) S an der Kabeltransporteinrichtung K zur Verfügung steht.

Die Steuerung 100 koordiniert beispielsweise die Übergabe der Kabel aus den Kabelausgabeeinrichtungen an zweckmässige Positionen in der Kabeltransporteinrichtung, so dass die Kabel in einem gewünschten Zustand auf der Kabeltransporteinrichtung angeordnet sind.

Die Steuerung 100 kann einer Bedienperson des Maschinenverbundes V Empfehlungen oder Anweisungen geben, wie der Maschinenverbund V für bestimmte Produktionsaufträge optimiert ausgerüstet werden kann (z.B. Werkzeuge, Maschinenoptionen, zu verarbeitendes Material). Die Steuerung 100 kann daraus automatisch Bestellund Umbauanweisungen für die Bedienperson generieren und so die Optimierung des Maschinenverbundes an die Anforderungen unterstützen.

Die Steuerung 100 und/oder ggf. weitere einzelne Steuerungen von Bestandteilen des Maschinenverbundes V können beliebig auf ein oder mehrere Bestandteile von Steuerungshardware, Computer, Software und dergleichen verteilt werden.

Die Steuerung 100 ist beispielsweise auch so konfiguriert, dass sie laufend protokolliert und speichert, welche Kabel aus welcher Quelle sich an welcher Position in der Kabeltransporteinrichtung befinden, und sie führt ein digitales Abbild des Bestückungszustandes des Maschinenverbundes V. Dadurch wird auch die Rückverfolgbarkeit jedes einzelnen Kabels sichergestellt. Die Steuerung 100 ist beispielsweise auch so konfiguriert, dass Daten wie Mess- oder Produktionsdaten eines Kabels gespeichert, dem besagten Kabel zugeordnet und als digitales Abbild mitgeführt und abgespeichert werden.

## Patentansprüche

1. Maschinenverbund (V) zum Anordnen von Kabeln gemäss einer vorgegebenen Kabelsequenz (S1, ..., S4), wobei die Kabelsequenz Kabeltypen aus zumindest einer ersten Kabeltypgruppe und einer zweiten Kabeltypgruppe umfasst, wobei die erste Kabeltypgruppe von einem ersten Kabeltyp und einem zweiten Kabeltyp nur den ersten Kabeltyp umfasst und die zweite Kabeltypgruppe von dem ersten Kabeltyp und dem zweiten Kabeltyp nur den zweiten Kabeltyp umfasst, wobei der Maschinenverbund umfasst:
- eine erste Kabelausgabeeinrichtung (M1, M2, K1, L1, L2, E1, E2), konfiguriert zum Ausgeben eines Kabels der ersten Kabeltypgruppe;
- eine zweite Kabelausgabeeinrichtung (M1, M2, K1, L1, L2, E1, E2), konfiguriert zum Ausgeben eines Kabels der zweiten Kabeltypgruppe;
- eine Kabeltransporteinrichtung (K, K2), konfiguriert zum selektiven Übernehmen des Kabels von der ersten Kabelausgabeeinrichtung und des Kabels von der zweiten Kabelausgabeeinrichtung und zum Transportieren der übernommenen Kabel, wobei das selektive Übernehmen zumindest teilweise gemäss der vorgegebenen Kabelsequenz (S1, ..., S4) erfolgt.

2. Maschinenverbund (V) nach Anspruch 1, wobei die Kabeltransporteinrichtung (K) eine Mehrzahl von in einer Sequenzrichtung, insbesondere einer Transportrichtung (TR), nacheinander angeordneten Haltern (H1, ... H22) jeweils zum Aufnehmen zumindest eines Teils eines Kabels gemäss der Kabelsequenz (S1, ..., S4) aufweist.

3. Maschinenverbund (V) nach einem der vorhergehenden Ansprüche, der weiter eine Kabelentnahmeeinrichtung (L1, L2, E1, E2) umfasst, wobei die Kabeltransporteinrichtung (K, K2) weiter konfiguriert ist zum selektiven Übergeben eines Kabels aus der Kabeltransporteinrichtung (K, K2) an die Kabelentnahmeeinrichtung (E1, E2), wobei das selektive Übergeben zumindest teilweise gemäss der vorgegebenen Kabelsequenz (S1, ..., S4) erfolgt.

4. Maschinenverbund (V) nach einem der vorhergehenden Ansprüche, der weiter mindestens eine Greifeinrichtung (G1, G2, G3, G4, G4a, G4b) zum selektiven Übernehmen und/oder zum selektiven Übergeben des Kabels umfasst.

5. Maschinenverbund (V) nach einem der vorhergehenden Ansprüche,
wobei die Kabeltransporteinrichtung (K, K1, K2) zu zumindest einer von der ersten Kabelausgabeeinrichtung, der zweiten Kabelausgabeeinrichtung und der Kabelentnahmeeinrichtung bewegbar ist.

6. Maschinenverbund (V) nach einem der vorhergehenden Ansprüche,
wobei zumindest eine von der ersten Kabelausgabeeinrichtung und der zweiten Kabelausgabeeinrichtung eine Kabelverarbeitungsmaschine (M1, M2) umfasst.

7. Maschinenverbund (V) nach einem der vorhergehenden Ansprüche,
wobei zumindest eine von der ersten Kabelausgabeeinrichtung, der zweiten Kabelausgabeeinrichtung und der Kabelentnahmeeinrichtung eine Kabeleinspeisevorrichtung (E1, E2) umfasst.

8. Maschinenverbund (V) nach Anspruch 7, wobei die Kabeleinspeisevorrichtung (E1, E2) zum Übernehmen eines durch eine Bedienperson manuell zugeführten Kabels und/oder zum Übergeben eines Kabels an eine Bedienperson konfiguriert ist.

9. Maschinenverbund (V) nach einem der vorhergehenden Ansprüche, wobei zumindest eine von der ersten Kabelausgabeeinrichtung, der zweiten Kabelausgabeeinrichtung und der Kabelentnahmeeinrichtung einen Kabelspeicher (L1, L2) umfasst.

10. Maschinenverbund (V) nach einem der vorhergehenden Ansprüche, der weiter eine Steuerung umfasst, die zum Steuern zumindest des selektiven Übernehmens und/oder des selektiven Übergebens konfiguriert ist.

11. Maschinenverbund (V) nach Anspruch 10, wobei die Steuerung weiter konfiguriert ist zum Entgegennehmen einer gewünschten Kabelsequenz, Ermitteln einer Zusammenstellung aus zumindest der ersten Kabeltypgruppe von der ersten Kabelausgabeeinrichtung und der zweiten Kabeltypgruppe von der zweiten Kabelausgabeeinrichtung gemäss der gewünschten Kabelsequenz als die vorgegebene Kabelsequenz, und Erzeugen einer tatsächlichen Abfolge von Kabeln gemäss der vorgegebenen Kabelsequenz durch Ansteuern zumindest der ersten Kabelausgabeeinrichtung und der zweiten Kabelausgabeeinrichtung.

12. Maschinenverbund (V) nach Anspruch 10 oder 11, wobei die Steuerung weiter konfiguriert ist zum Speichern von Daten, die zumindest eines aus der folgenden Gruppe enthalten: gegenwärtige Position eines Kabels in der Kabeltransporteinrichtung, Quelle eines Kabels in der Kabeltransporteinrichtung, Konfiguration des Maschinenverbundes (V), Messdaten eines Kabels in der Kabeltransporteinrichtung, Produktionsdaten eines Kabels in der Kabeltransporteinrichtung.

13. Verfahren zum Anordnen von Kabeln gemäss einer vorgegebenen Kabelsequenz (S1, ..., S4), wobei die Kabelsequenz Kabeltypen aus zumindest einer ersten Kabeltypgruppe und einer zweiten Kabeltypgruppe umfasst, wobei die erste Kabeltypgruppe von einem ersten Kabeltyp und einem zweiten Kabeltyp nur den ersten Kabeltyp umfasst und die zweite Kabeltypgruppe von dem ersten Kabeltyp und dem zweiten Kabeltyp nur den zweiten Kabeltyp umfasst, wobei das Verfahren umfasst:
- Ausbilden eines Maschinenverbundes (V), der Folgendes umfasst: eine erste Kabelausgabeeinrichtung (M1, M2, K1, L1, L2, E1, E2), konfiguriert zum Ausgeben eines Kabels der ersten Kabeltypgruppe; eine zweite Kabelausgabeeinrichtung (M1, M2, K1, L1, L2, E1, E2), konfiguriert zum Ausgeben eines Kabels der zweiten Kabeltypgruppe; und eine Kabeltransporteinrichtung (K, K2), konfiguriert zum selektiven Übernehmen des Kabels von der ersten Kabelausgabeeinrichtung und des Kabels von der zweiten Kabelausgabeeinrichtung und zum Transportieren der übernommenen Kabel;
- automatisches Ansteuern des Maschinenverbundes (V) derart, dass das selektive Übernehmen zumindest teilweise gemäss der vorgegebenen Kabelsequenz (S1, ..., S4) erfolgt.

14. Verfahren nach Anspruch 13, wobei der Maschinenverbund (V) weiter eine Kabelentnahmeeinrichtung (L1, L2, E1, E2) umfasst, wobei die Kabeltransporteinrichtung (K, K2) weiter konfiguriert ist zum selektiven Übergeben eines Kabels aus der Kabeltransporteinrichtung (K, K2) an die Kabelentnahmeeinrichtung (E1, E2), wobei das Verfahren weiter umfasst:
- automatisches Ansteuern des Maschinenverbundes (V) derart, dass das selektive Übergeben zumindest teilweise gemäss der vorgegebenen Kabelsequenz (S1, ..., S4) erfolgt.

15. Verfahren nach Anspruch 13 oder 14, wobei das Verfahren weiter umfasst:
- Entgegennehmen einer gewünschten Kabelsequenz;
- Ermitteln einer Zusammenstellung aus zumindest der ersten Kabeltypgruppe von der ersten Kabelausgabeeinrichtung und der zweiten Kabeltypgruppe von der zweiten Kabelausgabeeinrichtung gemäss der gewünschten Kabelsequenz als die vorgegebene Kabelsequenz;
- Erzeugen einer tatsächlichen Abfolge von Kabeln gemäss der vorgegebenen Kabelsequenz durch Ansteuern zumindest der ersten Kabelausgabeeinrichtung und der zweiten Kabelausgabeeinrichtung.
